# EUROPÄISCHE PATENTSCHRIFT

(11) **EP 3 483 390 B1**
(45) Veröffentlichungstag und Bekanntmachung des Hinweises auf die Patenterteilung: **27.09.2023**
(21) Anmeldenummer: 18206275.2
(22) Anmeldetag: 14.11.2018
(51) Int. Cl.: F01C 21/10, F04C 13/00, F04C 15/06

(54) **PUMPVORRICHTUNG**
PUMPING DEVICE
DISPOSITIF DE POMPAGE

(30) Priorität: 14.11.2017 DE 102017126750
(43) Veröffentlichungstag der Anmeldung: 15.05.2019
(73) Patentinhaber: Schwäbische Hüttenwerke Automotive GmbH, 73433 Aalen (DE)
(72) Erfinder: Ickert, Roman, 88326 Aulendorf (DE); Peters, Sven, 88427 Bad Schussenried (DE); Ahmeti, Emin, 88400 Rindenmoos (DE)
(74) Vertreter: SSM Sandmair

(56) Entgegenhaltungen:
- EP-A2- 2 743 506
- GB-A- 2 130 110

## Beschreibung

Die Erfindung betrifft eine Pumpvorrichtung mit einem Pumpvorrichtungsgehäuse und einer im Pumpvorrichtungsgehäuse und/oder zumindest teilweise vom Pumpvorrichtungsgehäuse gebildeten Förderkammer mit einem Einlass und einem Auslass. In der Förderkammer ist eine Förderstruktur angeordnet, die ein Fluid von dem Einlass auf einer Niederdruckseite der Pumpvorrichtung zu dem Auslass auf einer Hochdruckseite der Pumpvorrichtung fördert. Die Pumpvorrichtung umfasst weiterhin eine erste Leitung, die das Fluid von dem Auslass aus der Förderkammer zu einem ersten Aggregat leitet und eine zweite Leitung, die von der ersten Leitung im Bereich vor dem ersten Aggregat abzweigt und einen Teil des unter Druck stehenden Fluids einem zweiten Aggregat zuführt.

Pumpvorrichtungen, wie Einzel- oder Tandempumpen sind hinlänglich bekannt. Der Einbauraum für solche Pumpvorrichtungen, insbesondere wenn diese Anbauteile eines Verbrennungsmotors für ein Kraftfahrzeug sind, wird im Regelfall immer kleiner. Um mit der Pumpvorrichtung gleichzeitig mehrere Aggregate mit dem gepumpten Fluid versorgen zu können, müssen daher oft die Leitungen zu den Aggregaten sehr verwinkelt verlegt werden, was zu relativ langen Leitungen führen kann, mit den entsprechenden Nachteilen, wie zum Beispiel Störung des Fließstroms durch zahlreiche Richtungsänderungen.

So ist aus der EP 2 743 506 A2 eine Gaspumpe mit einer abdichtenden Ölnut bekannt, die Teil einer Tandempumpe ist. Die Tandempumpe umfasst eine Filtereinrichtung, die zwischen einer Flüssigkeitspumpe und einem Aggregat, das durch die Flüssigkeitspumpe mit Flüssigkeit versorgt wird. Aus der EP 2 743 506 A2 ist es bekannt, dass nach der Filtereinrichtung eine Zuleitung von dem Flüssigkeitssystem abzweigt, um gereinigte Flüssigkeit zu der abdichtenden Nut zu leiten. Aus der GB 2 130 110 A ist eine selbstreinigende Filtereinheit eines Hochdruck-Hydrauliksystems bekannt.

Es ist daher eine Aufgabe der Erfindung, eine Pumpvorrichtung zur Verfügung zu stellen, die es ermöglicht, unter Vermeidung der genannten Nachteile wenigstens zwei voneinander unabhängige Aggregate auf kurzem Weg mit dem gepumpten Fluid zu versorgen.

Diese Aufgabe wird durch den Gegenstand des Anspruchs 1 gelöst. Vorteilhafte Weiterbildungen sind in den abhängigen Ansprüchen beschrieben.

Ein Aspekt der Erfindung betrifft eine Pumpvorrichtung für ein Kraftfahrzeug, die ein Pumpvorrichtungsgehäuse und eine in dem Pumpvorrichtungsgehäuse und/oder zumindest teilweise vom Pumpvorrichtungsgehäuse gebildete Förderkammer mit einem Einlass und einem Auslass aufweist. Die Pumpvorrichtung umfasst weiterhin eine Förderstruktur, die in der Förderkammer angeordnet ist und ein Fluid von dem Einlass auf einer Niederdruckseite der Pumpvorrichtung zu dem Auslass auf einer Hochdruckseite der Pumpvorrichtung fördert. Des Weiteren umfasst die Pumpvorrichtung eine erste Leitung, die das Fluid von dem Auslass aus der Förderkammer zu einem ersten Aggregat leitet, und eine zweite Leitung, die von der ersten Leitung vor dem ersten Aggregat abzweigt und einen Teil des unter Druck stehenden Fluids einem zweiten Aggregat zuführt. Bei dem ersten Aggregat und dem zweiten Aggregat handelt es sich um unterschiedliche Aggregate. Bei einem Aggregat handelt es sich um einen Filter, bei dem anderen Aggregat kann es sich beispielsweise um eine Pumpe oder einen Motor oder dergleichen handeln.

Vorzugsweise ist das in der Förderkammer geförderte Fluid eine Flüssigkeit, insbesondere ein Öl.

Als Leitung im Sinne der Anmeldung wird ein Transportweg für das Fluid angesehen, der extra für diesen Transport erstellt oder in das Pumpengehäuse eingebracht oder durch das Pumpengehäuse zumindest teilweise mit gebildet wird, um das Fluid zu transportieren. Leckagen irgendeiner Art, ob gewollt oder nicht gewollt, sind keine Leitungen im Sinne dieser Anmeldung. Die zweite Leitung weist im Regelfall einen Durchmesser auf, der kleiner ist, als der Durchmesser der ersten Leitung, so dass ein Hauptfluss des Fluids durch die erste Leitung zum ersten Aggregat geleitet wird.

Die zweite Leitung kann von der ersten Leitung in einem beliebigen Winkel abzweigen, zum Beispiel in einem Winkel von 30°, 60°, 90° oder irgendeinem anderen Winkel. Bevorzugt zweigt die zweite Leitung in einem Winkel von der ersten Leitung ab, der im Wesentlichen quer zur Fließrichtung des Fluids in der ersten Leitung gerichtet ist. Zweigt die zweite Leitung an einem geraden Abschnitt der ersten Leitung ab, so kann der Winkel der Abzweigung im Wesentlichen 90° betragen.

Bei dem ersten Aggregat handelt es sich um einen Filter, der das vom Auslass über die erste Leitung zugeführte Fluid durch Filtration von festen Bestandteilen oder Partikeln, zum Beispiel Verschmutzungen, reinigt. Bei dem Fluid kann es sich beispielsweise um ein Öl, insbesondere ein Schmieröl handeln, ohne dass die Erfindung auf dieses Fluid eingeschränkt ist, da das Prinzip der Erfindung vorteilhaft auch bei anderen zu pumpenden Flüssigkeiten mit Verunreinigungen genutzt werden kann.

An der Abzweigung der zweiten Leitung von der ersten Leitung ist ein Filterelement angeordnet, das verhindert, dass das Fluid aus der ersten Leitung ohne Filtration in die zweite Leitung gelangt. Das Filterelement kann eine gleiche oder ähnliche Filterfeinheit aufweisen wie der Filter, dem die erste Leitung das Fluid zuführt. Das Filterelement kann jedoch auch eine gröbere Filterfeinheit aufweisen als der Filter, das heißt, dass das Filterelement zwar große Partikel aus dem Fluid ausfiltert, kleinere Partikel, die der Filter in der ersten Leitung mit ausfiltern würde, aber in die zweite Leitung einströmen lässt.

Das Filterelement ist vorzugsweise selbstreinigend angeordnet. Das Filterelement ist in der ersten Leitung und/oder der zweiten Leitung bevorzugt so angeordnet, dass die Partikel, die durch das Filterelement daran gehindert werden, in die zweite Leitung einzuströmen, durch das in der ersten Leitung strömende Fluid vom Filterelement weg gespült und in Richtung des ersten Aggregats mitgenommen werden. Da es sich bei dem ersten Aggregat um einen Filter handelt, werden die mitgenommenen Partikel dort durch Filtration aus dem Fluid entfernt.

Das Filterelement kann eine Filterfläche aufweisen, die parallel zur Fließrichtung des Fluids in der ersten Leitung angeordnet ist. Die Filterfläche kann eine durchlässige Wandung der ersten Leitung bilden. Bevorzugt weist das Filterelement eine Filterfläche auf, die quer zur Fließrichtung des Fluids in der zweiten Leitung angeordnet ist. Das Filterelement kann in der Art angeordnet sein, dass das Fluid in der ersten Leitung das Filterelement und/oder die Filterfläche zumindest teilweise umströmt. Vorzugsweise ragt das Filterelement und/oder die Filterfläche quer zur Fließrichtung zumindest teilweise in die erste Leitung hinein. Das Filterelement und/oder die Filterfläche ragt vorzugsweise aus der zweiten Leitung heraus. Grundsätzlich ist es denkbar, dass das Filterelement und/oder die Filterfläche in die zweite Leitung hineinragt.

Das Filterelement kann ein Gitter, ein Sieb oder ein Gewebe sein oder ein Gitter, ein Sieb oder ein Gewebe umfassen. Das Gitter, das Sieb oder das Gewebe bildet vorzugsweise die Filterfläche aus.

Das Filterelement ist vorzugsweise als ein Filter aus einem Sintermetall ausgebildet, das heißt, insbesondere mittels eines Sinterverfahrens aus Metallpulver, zum Beispiel aus Bronze hergestellt. Verschiedene Korngrößen und Wanddicken der Filter ermöglichen die exakte Anpassung von Durchströmbarkeit und Filtereigenschaften. Das Filterelement kann scheibenförmig oder topfförmig sein, oder eine andere Form aufweisen, wie beispielsweise eine zylindrische, kegelstumpfförmige oder trichterförmige Grundform.

Im Bereich der Abzweigung oder an der Abzweigung ist das Filterelement in der ersten Leitung und/oder der zweiten Leitung oder an einer der ersten Leitung zugewandten Stirnseite der zweiten Leitung formschlüssig, kraftschlüssig und/oder stoffschlüssig fixiert oder verbunden, zum Beispiel durch elastisches Einrasten, Einpressen, Kleben, Löten, Schweißen, etc. Grundsätzlich kann jede geeignete Verbindungsart vom Fachmann gewählt werden. Das Filterelement kann lösbar mit der ersten und/oder zweiten Leitung verbunden sein, so dass es zum Beispiel bei einer Überholung oder Reparatur der Pumpvorrichtung ausgewechselt werden kann, ohne dass dabei die Pumpvorrichtung beschädigt wird.

Das Filterelement als Gitter oder Sieb kann auch dadurch erstellt werden, dass die erste Leitung im Bereich der Abzweigung der zweiten Leitung zahlreiche kleine Öffnungen in der Umfangswand aufweist, die als Filterelement wirken. Diese kleinen und kleinsten Öffnungen können beispielsweise mit einem Laser in die erste Leitung oder in die Umfangswand der ersten Leitung eingebracht werden. Die Fläche mit den Öffnungen ist kleiner als ein wirksamer Durchmesser der zweiten Leitung, und alle Öffnungen münden vollständig in die zweite Leitung, nachdem diese mit der ersten Leitung verbunden wurde.

Die erste Leitung kann den Auslass aus der Förderkammer umfassen, und die Abzweigung kann im oder nahe am Auslass ausgebildet sein. Vorzugsweise liegt die Abzweigung mit einem Abschnitt der ersten Leitung und einem Abschnitt der zweiten Leitung innerhalb des Pumpvorrichtungsgehäuses, und das Pumpvorrichtungsgehäuse bildet bevorzugt zumindest einen Teil der Abzweigung und/oder der ersten Leitung und/oder der zweiten Leitung. Das Pumpvorrichtungsgehäuse kann einen Pumpvorrichtungsgehäusedeckel umfassen, der die Abzweigung und/oder einen Abschnitt der ersten Leitung und/oder einen Abschnitt der zweiten Leitung bildet oder zumindest teilweise mit bildet.

Bei der Pumpvorrichtung kann es sich um eine Ölpumpe, wie beispielsweise eine Rotationspumpe, und bei dem ersten Aggregat um einen Ölfilter handeln. Die Pumpvorrichtung, insbesondere die Ölpumpe, selbst kann das zweite Aggregat bilden. Dabei führt die zweite Leitung das Fluid beispielsweise zu zumindest einer Schmierstelle der Pumpvorrichtung, insbesondere der Ölpumpe.

Die Pumpvorrichtung kann aber auch eine Tandempumpe sein, die bevorzugt eine Schmierpumpe und eine Vakuumpumpe umfasst. Bei der Tandempumpe kann die Schmierpumpe und/oder die Vakuumpumpe das zweite Aggregat bilden, das von der zweiten Leitung mit dem gepumpten Fluid versorgt wird.

Die zweite Leitung kann nach dem Filterelement eine erste Zuleitung und wenigstens eine zweite Zuleitung bilden oder aufweisen, die das gepumpte Fluid dem zweiten und eventuell einem dritten Aggregat zuleiten oder dem zweiten Aggregat an unterschiedlichen Stellen zu unterschiedlichen Zwecken zur Verfügung stellen. So kann in dem Fall, dass das zweite Aggregat die Vakuumpumpe ist, die erste Zuleitung eine Förderkammer der Vakuumpumpe mit einem Schmierfluid versorgen, und die zweite Zuleitung kann das gleiche Fluid, das als Schmierfluid genutzt wird, zum Beispiel einer Dichtnut zuführen, um als Dichtfluid zu dienen.

Die erste Leitung kann beispielsweise Schmiermittel zu einem Verbrennungsmotor eines Fahrzeugs, bevorzugt einem Verbrennungsmotor eines Kraftfahrzeugs, leiten. Die erste Leitung kann nach dem ersten Aggregat, dem Filter, ebenfalls in zwei oder mehr Zuleitungen unterteilt werden, um mehr als ein Aggregat oder ein einziges Aggregat an mehreren Stellen gleichzeitig mit dem Schmierfluid zu versorgen. Die Vakuumpumpe versorgt vorzugsweise einen Bremskraftverstärker des Kraftfahrzeugs mit Unterdruck.

Im Folgenden wird ein Ausführungsbeispiel der Erfindung anhand von Figuren näher erläutert. Die Figuren zeigen im Einzelnen:
- Figur 1:: eine Draufsicht einer Pumpvorrichtung in einem Längsschnitt
- Figur 2:: die Pumpvorrichtung der Figur 1 in einer Explosionsdarstellung
- Figur 3:: einen Ausschnitt eines Längsschnitts der Pumpvorrichtung in einer Seitenansicht
- Figur 4:: einen Ausschnitt des Längsschnitts der Pumpvorrichtung aus Figur 1.

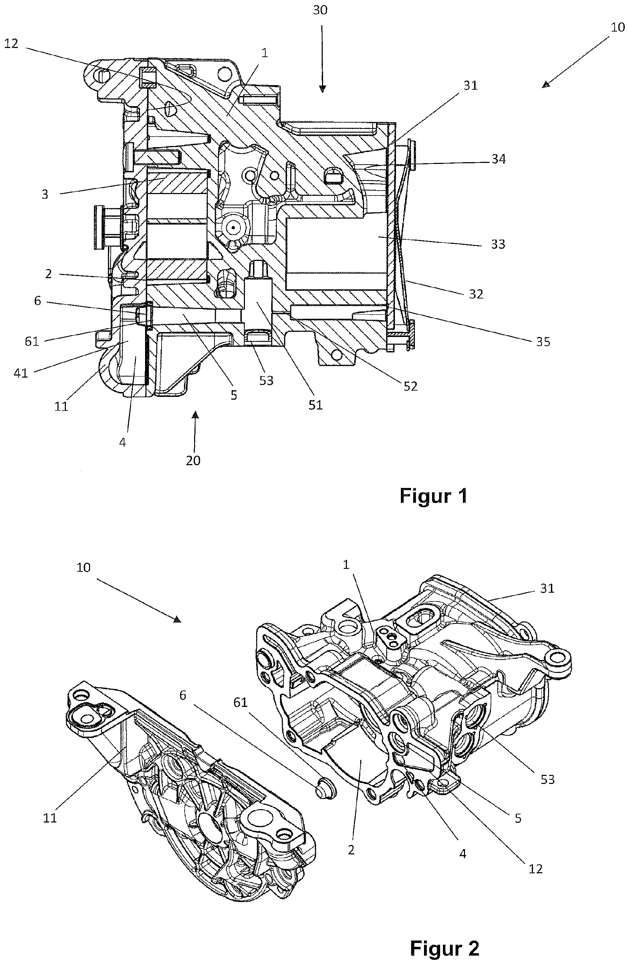

Die Figur 1 zeigt in einer Draufsicht einen Schnitt parallel zu einer nicht dargestellten Rotationsachse einer erfindungsgemäßen Pumpvorrichtung 10. Bei der Pumpvorrichtung 10 handelt es sich um eine Tandempumpe. Die Pumpvorrichtung 10 weist eine Förderpumpe 20 und eine Vakuumpumpe 30 auf. Ferner umfasst die Pumpvorrichtung 10 ein Pumpvorrichtungsgehäuse 1, 11, 31 mit einem gemeinsamen Gehäuse 1 für die Förderpumpe 20 und die Vakuumpumpe 30, einem Gehäusedeckel 11 für die Förderpumpe 20 und einem Gehäusedeckel 31 für die Vakuumpumpe 30. Die Förderpumpe 20 und die Vakuumpumpe 30 werden über eine gemeinsame Antriebswelle angetrieben. Die Antriebswelle ist einteilig ausgeführt. Die Förderpumpe 20 umfasst eine Förderkammer 2 und den Gehäusedeckel 11, der die Förderkammer 2 an einer der Vakuumpumpe 30 abgewandten Stirnseite 12 des Gehäuses 1 verschließt. In der Förderkammer 2 ist eine Förderstruktur 3, zum Beispiel ein Rotor, gelagert, der sich um die Rotationachse dreht und dadurch ein Fluid von einem nicht gezeigten Einlass in die Förderkammer 2 zu einem Auslass aus der Förderkammer 2 fördert und dabei gleichzeitig einen Druck des Fluids erhöht. Die Förderpumpe 20 ist als eine

Schmierölpumpe ausgebildet, die einen Verbrennungsmotor eines Kraftfahrzeugs mit Schmieröl versorgt.

Der Auslass bildet einen Teil einer ersten Leitung 4, die einen ersten Teil oder Teilfluss des unter Druck stehenden Fluids vom Auslass zu einem nicht gezeigten ersten Aggregat leitet. Das erste Aggregat ist strömungstechnisch vor dem Verbrennungsmotor angeordnet. Das erste Aggregat ist ein Filter, der das vom Auslass über die erste Leitung 4 zugeführte Fluid durch Filtration reinigt. Strömungstechnisch vor dem ersten Aggregat zweigt an einer Abzweigung 41 von der ersten Leitung 4 eine zweite Leitung 5 ab, die einen zweiten Teil oder Teilfluss des unter Druck stehenden Fluids zu einem zweiten Aggregat leitet, wobei im gezeigten Ausführungsbeispiel das zweite Aggregat die Vakuumpumpe 30 ist.

An der Abzweigung 41 der zweiten Leitung 5 von der ersten Leitung 4 ist ein Filterelement 6 angeordnet, durch das das in die zweite Leitung 5 einfließende Fluid fließen muss. Dabei wird das in die zweite Leitung 5 geleitete Fluid gefiltert, die herausgefilterten Partikel bleiben am oder im Filterelement 6 hängen. Das Filterelement 6 kann selbstreinigend sein. Es ist selbstreinigend angeordnet. Das heißt, dass die durch das Filterelement 6 zurückgehaltenen Partikel von dem Fluidstrom in der ersten Leitung 4 in Richtung des Filters mitgenommen und dort aus dem Fluid herausgefiltert werden. Die Filterfeinheit des Filterelements 6 und des Filters können gleich, nahezu gleich oder unterschiedlich sein, wobei bei unterschiedlicher Filterfeinheit der Filter bevorzugt eine höhere Filterfeinheit aufweist als das Filterelement 6.

Das im Ausführungsbeispiel gezeigte Filterelement 6 ist über einen Kragen 61 mit der zweiten Leitung 5 verbunden. Der Kragen 61 kann Teil der zweiten Leitung 5 oder Teil des Filterelements 6 oder ein separates Teil sein. Handelt es sich um ein separates Teil, so kann dieses Teil mit der zweiten Leitung 5 und/oder der ersten Leitung 4 verbunden werden und das Filterelement 6 aufnehmen.

Die erste Leitung 4 ist durch das gemeinsame Gehäuse 1 und durch den Gehäusedeckel 11 der Förderpumpe 20 gebildet. Die zweite Leitung 5 ist durch das gemeinsame Gehäuse 1 gebildet. Die zweite Leitung 5 weist an der Stirnseite 12 eine Öffnung auf, die die Abzweigung 41 bildet. Die Öffnung der zweiten Leitung 5 ist mit der durch den Gehäusedeckel 11 der Förderpumpe 20 gebildeten ersten Leitung 4 verbunden. Die Öffnung der zweiten Leitung 5 ist durch den Gehäusedeckel 11 der Förderpumpe 20 oder durch die durch den Gehäusedeckel 11 der Förderpumpe 20 gebildete erste Leitung 4 zur Umgebung hin verschlossen. Das Filterelement 6 ist an der stirnseitigen Öffnung der zweiten Leitung 5 angeordnet. Das Filterelement 6 ragt von der Stirnseite 12 heraus. Es ragt in die durch den Gehäusedeckel 11 der Förderpumpe 20 gebildete erste Leitung 4 hinein. Das Filterelement 6 ragt aus der Öffnung der zweiten Leitung 5 heraus.

Das Filterelement 6 ist innerhalb des Pumpvorrichtungsgehäuses 1, 11, 31 angeordnet. Das Filterelement 6 ist mit dem gemeinsamen Gehäuse 1 verbunden. Es ragt stirnseitig aus dem gemeinsamen Gehäuse 1 heraus. Der Gehäusedeckel 11 der Förderpumpe 20 verdeckt das Filterelement 6.

Die zweite Leitung 5 teilt sich in der Pumpvorrichtung 10 des Ausführungsbeispiels in eine erste Zuleitung 51 und eine zweite Zuleitung 52. Die erste Zuleitung 51 kann beispielsweise mit einer Förderkammer 33 der Vakuumpumpe 30 verbunden sein und das Fluid als Schmier- und Dichtmittel in die Förderkammer 33 leiten. Die zweite Zuleitung 52 ist im Ausführungsbeispiel mit einer Dichtnut 35 der Vakuumpumpe 30 verbunden. Die Dichtnut 35 kann beispielsweise an einer der Förderpumpe 20 abgewandten und einer Innenseite des Gehäusedeckels 31 der Vakuumpumpe 30 zugewandten Stirnseite 34 des Gehäuses 1 gebildet sein. Die hydraulische Dichtnut 35 umgibt zumindest teilweise die Förderkammer 33 der Vakuumpumpe 30 und ist zwischen dem Gehäuse 1 und dem Gehäusedeckel 31 gebildet. Die Dichtnut 35 dichtet hydraulisch die Förderkammer 33 der Vakuumpumpe 30 gegenüber der Umgebung der Vakuumpumpe 30 ab. Der Gehäusedeckel 31 der Vakuumpumpe 30 wird im Ausführungsbeispiel mittels eines Federelements 32 gegen die Stirnseite 34 der Förderkammer 33 der Vakuumpumpe 30 gedrückt. Bei einem Überdruck innerhalb der Förderkammer 33 kann der Gehäusedeckel 31 gegen die Federkraft des Federelements 32 zumindest in einem Umfangsabschnitt von der Stirnseite 34 abheben und so einen Entlastungsspalt bilden, durch den Fluid aus der Förderkammer 33 unter Umgehung des Auslasses an die Umgebung abgegeben werden kann.

Die Figur 2 zeigt die Pumpvorrichtung 10 der Figur 1, wobei der Gehäusedeckel 11 vom Gehäuse 1 absteht, so dass ein Blick in die Förderkammer 2 möglich ist. Die Förderstruktur 3 ist in der Figur 2 nicht gezeigt.

Der Auslass aus der Förderkammer 3 ist im Gehäusedeckel 11 ausgebildet und nicht zu sehen. Die erste Leitung 4, die zweite Leitung 5 und das Filterelement 6 sind sichtbar. Das Filterelement 6 umfasst in dieser Ausführung den Kragen 61, mit dem das Filterelement 6 in die zweite Leitung 5 eingesteckt werden kann, so dass das Fluid nur durch das Filterelement 6 aus der ersten Leitung 4 in die zweite Leitung 5 fließen kann. Der Kragen 61 kann ein Dichtungsring sein, zum Beispiel aus einem elastischen Material, aus Keramik oder einem Spezialkunststoff, der den Bedingungen, die an der Abzweigung 41 der zweiten Leitung 5 von der ersten Leitung 4 herrschen, wie beispielsweise Wärme, Druck und chemisch aggressives Fluid über lange Zeit standhält.

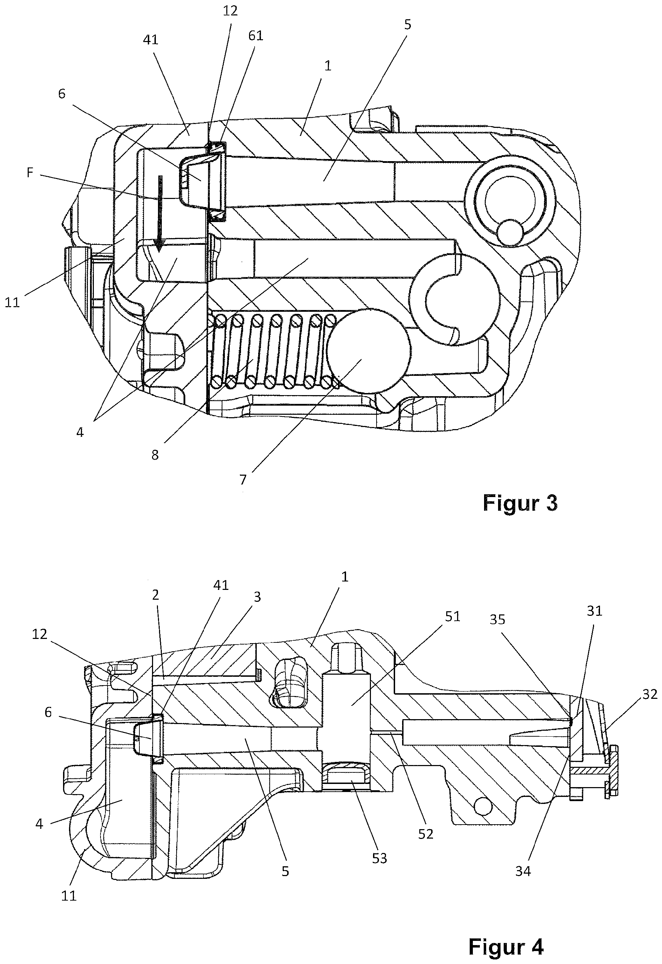

Die Figur 3 zeigt einen Ausschnitt einer Seitenansicht eines Schnitts parallel zur Rotationsachse der Pumpvorrichtung 10. Eine Schnittebene der Figur 1 und eine Schnittebene der Figur 3 sind senkrecht zueinander angeordnet. Die Figur 3 zeigt die Pumpvorrichtung 10 mit der ersten Leitung 4, einem Rückschlagventil 7, das mit einem Federelement 8 in eine geschlossene Stellung vorgespannt ist, der zweiten Leitung 5 und dem Filterelement 6. Das Rückschlagventil 7 öffnet die erste Leitung 4 bei hohen Drücken in die Umgebung der Pumpvorrichtung 10, beispielsweise bei einem Kaltstart. Durch die Größe des Filterelements 6 kann ein Volumen des Teilstroms, der in die zweite Leitung 5 geleitet wird, zumindest ungefähr festgelegt werden. Grundsätzlich kann das Filterelement 6 nur an seiner gegen eine Fließrichtung F des Fluids gewandten Seite Filtrationsöffnungen aufweisen, während die in die Fließrichtung gewandte Seite geschlossen ist, wodurch eine Umleitung eines Teilstroms des Fluids aus der ersten Leitung 4 in die zweite Leitung 5 erzwungen werden kann.

Die Figur 4 zeigt ein Detail der Figur 1, das zur Figur 1 bereits ausführlich beschrieben wurde. Die zweite Leitung 5 ist in eine erste Zuleitung 51 und eine zweite Zuleitung 52 unterteilt. Das Filterelement 6 ist so angeordnet, dass Fluid aus dem Auslass respektive der ersten Leitung 4 nur durch das Filterelement 6 in die zweite Leitung 5 einfließen kann. Die zweite Leitung 5 ist in der Abzweigung 41 von der ersten Leitung 4 quer zu dieser angeordnet, das heißt, das Fluid wird quer zur Fließrichtung F, die in der Figur 4 senkrecht zur Blattebene verläuft, ausgelenkt. Die zweite Leitung 5, respektive die erste Zuleitung 51 ist als Bohrung in das Gehäuse 1 der Pumpvorrichtung 10 eingebracht und mit einer Verschlusskappe 53 luftdicht verschlossen.

### Bezugszeichenliste:

- 1: Gehäuse
- 10: Pumpvorrichtung
- 11: Gehäusedeckel
- 12: Stirnseite
- 2: Förderkammer
- 20: Förderpumpe
- 3: Förderstruktur
- 30: Vakuumpumpe
- 31: Gehäusedeckel
- 32: Federelement
- 33: Förderkammer
- 34: Stirnseite
- 35: Dichtnut
- 4: erste Leitung
- 41: Abzweigung
- 5: zweite Leitung
- 51: erste Zuleitung
- 52: zweite Zuleitung
- 53: Verschlusskappe
- 6: Filterelement
- 61: Kragen
- 7: Rückschlagventil
- 8: Federelement
- F: Fließrichtung

## Patentansprüche

1. Pumpvorrichtung für ein Kraftfahrzeug, mit
einem Pumpvorrichtungsgehäuse (1, 11, 31),
einer im Pumpvorrichtungsgehäuse (1, 11, 31) und/oder zumindest teilweise vom Pumpvorrichtungsgehäuse (1, 11, 31) gebildeten Förderkammer (2) mit einem Einlass und einem Auslass,
einer Förderstruktur (3), die in der Förderkammer (2) angeordnet ist und ein Fluid von dem Einlass auf einer Niederdruckseite der Pumpvorrichtung (10) zu dem Auslass auf einer Hochdruckseite der Pumpvorrichtung (10) fördert,
einer ersten Leitung (4), die das Fluid von dem Auslass aus der Förderkammer (2) zu einem ersten Aggregat leitet,
wobei das erste Aggregat ein Filter ist, der das vom Auslass über die erste Leitung (4) zugeführte Fluid durch Filtration reinigt,
**gekennzeichnet dadurch, dass**
strömungstechnisch vor dem ersten Aggregat eine zweite Leitung (5), die einen Teil des unter Druck stehenden Fluids einem zweiten Aggregat, beispielsweise einer Pumpe oder einem Motor, zuführt, von der ersten Leitung (4) abzweigt, und
an der Abzweigung (41) in der ersten Leitung (4) und/oder in der zweiten Leitung (5) oder an einer der ersten Leitung (4) zugewandten Stirnseite der zweiten Leitung (5) ein Filterelement (6) fixiert und/oder verbunden ist.

2. Pumpvorrichtung nach Anspruch 1, wobei das Filterelement (6) zumindest teilweise in die erste Leitung (4) hineinragt.

3. Pumpvorrichtung nach einem der vorhergehenden Ansprüche, wobei das Filterelement (6) an der Abzweigung (41) so angeordnet ist, dass Fluid nur durch das Filterelement (6) in die zweite Leitung gelangt und vom Filterelement (6) ausgefilterte Verunreinigungen vom in der ersten Leitung (4) vom Filterelement (6) weggespült und in Richtung des ersten Aggregats mitgenommen werden.

4. Pumpvorrichtung nach einem der vorhergehenden Ansprüche, wobei das Filterelement (6) ein Gitter, ein Sieb oder ein Gewebe ist oder umfasst oder gitterförmig oder siebförmig ausgebildet ist.

5. Pumpvorrichtung nach einem der vorhergehenden Ansprüche, wobei die erste Leitung (4) den Auslass aus der Förderkammer (2) umfasst und die Abzweigung (41) am Auslass ausgebildet ist.

6. Pumpvorrichtung nach einem der vorhergehenden Ansprüche, wobei die Abzweigung (41) mit einem Abschnitt der ersten Leitung (4) und einem Abschnitt der zweiten Leitung (5) innerhalb des Pumpvorrichtungsgehäuses (1, 11, 31) liegt und das Pumpvorrichtungsgehäuse (1, 11, 31) zumindest einen Teil der Abzweigung (41) und/oder der ersten Leitung (4) und/oder der zweiten Leitung (5) bildet.

7. Pumpvorrichtung nach einem der vorhergehenden Ansprüche, wobei die Pumpvorrichtung (10) eine Tandempumpe ist, die eine Flüssigkeitspumpe und eine Gaspumpe umfasst.

8. Pumpvorrichtung nach Anspruch 7, wobei die Flüssigkeitspumpe die erste Leitung (4) und die zweite Leitung (5) mit dem Fluid versorgt.

9. Pumpvorrichtung nach Anspruch 7 oder 8, wobei die Flüssigkeitspumpe eine Schmierpumpe (20) und die Gaspumpe eine Vakuumpumpe (30) ist.

10. Pumpvorrichtung nach einem der vorhergehenden Ansprüche, wobei das zweite Aggregat eine Gaspumpe, bevorzugt eine Vakuumpumpe, ist.

11. Pumpvorrichtung nach einem der Ansprüche 7 bis 10, wobei die zweite Leitung (5) über eine Zuleitung (51) die Flüssigkeitspumpe und/oder die Gaspumpe mit einem Schmier- und/oder Dichtmittel versorgt.

12. Pumpvorrichtung nach einem der Ansprüche 7 bis 11, wobei die zweite Leitung (5) über eine Zuleitung (52) eine Dichtnut (35) der Gaspumpe mit einem Dichtmittel versorgt.

## Claims

1. A pump device (10) for a motor vehicle, comprising:
a pump device housing (1, 11, 31);
a delivery chamber (2) which is formed in the pump device housing (1, 11, 31) and/or at least partially by the pump device housing (1, 11, 31) and which comprises an inlet and an outlet;
a delivery structure (3) which is arranged in the delivery chamber (2) and delivers a fluid from the inlet on a low-pressure side of the pump device (10) to the outlet on a high-pressure side of the pump device (10);
a first conduit (4) which channels the fluid from the outlet out of the delivery chamber (2) to a first assembly,
wherein the first assembly is a filter which cleans the fluid, fed from the outlet via the first conduit (4), by filtering it,
**characterised in that**
a second conduit (5) which feeds a portion of the pressurised fluid to a second assembly, for example a pump or an engine, diverges from the first conduit (4) before the first assembly in terms of flow dynamics, and
a filter element (6) is fixed and/or connected at the bifurcation (41) in the first conduit (4) and/or in the second conduit (5) or on an end face of the second conduit (5) which faces towards the first conduit (4).

2. The pump device according to claim 1, wherein the filter element (6) protrudes at least partially into the first conduit (4).

3. The pump device according to any one of the preceding claims, wherein the filter element (6) is arranged at the bifurcation (41) such that fluid can only pass into the second conduit (5) through the filter element (6), and contaminants filtered out by the the filter element (6) are flushed away from the filter element (6) in the first conduit (4) and are carried off towards the first assembly.

4. The pump device according to any one of the preceding claims, wherein the filter element (6) is or comprises a lattice, screen or mesh or is formed as a lattice or screen.

5. The pump device according to any one of the preceding claims, wherein the first conduit (4) comprises the outlet out of the delivery chamber (2), and the bifurcation (41) is formed at the outlet.

6. The pump device according to any one of the preceding claims, wherein the bifurcation (41) lies with a portion of the first conduit (4) and a portion of the second conduit (5) within the pump device housing (1, 11, 31), and the pump device housing (1, 11, 31) forms at least a part of the bifurcation (41) and/or first conduit (4) and/or second conduit (5).

7. The pump device according to any one of the preceding claims, wherein the pump device (10) is a tandem pump which comprises a liquid pump and a gas pump.

8. The pump device according to claim 7, wherein the liquid pump supplies the first conduit (4) and the second conduit (5) with the fluid.

9. The pump device according to claim 7 or 8, wherein the liquid pump is a lubricating pump (20), and the gas pump is a vacuum pump (30).

10. The pump device according to any one of the preceding claims, wherein the second assembly is a gas pump, preferably a vacuum pump.

11. The pump device according to any one of claims 7 to 10, wherein the second conduit (5) supplies the liquid pump and/or the gas pump with a lubricant and/or sealant via a feed conduit (51).

12. The pump device according to any one of claims 7 to 11, wherein the second conduit (5) supplies a sealing groove (35) of the gas pump with a sealant via a feed conduit (52).

## Revendications

1. Dispositif de pompe (10) pour véhicule automobile, comprenant :
un boîtier de dispositif de pompe (1, 11, 31) ;
une chambre de refoulement (2) formée dans le boîtier de dispositif de pompe (1, 11, 31) et / ou au moins partiellement par le boîtier de dispositif de pompe (1, 11, 31) et comportant une entrée et une sortie ;
une structure de refoulement (3) disposée dans la chambre de refoulement (2) et refoulant un fluide depuis l'entrée sur un côté basse pression du dispositif de pompe (10) vers la sortie sur un côté haute pression du dispositif de pompe (10) ;
une première conduite (4) conduissant le fluide depuis la sortie de la chambre de refoulement (2) vers un premier ensemble,
le premier ensemble étant un filtre nettoyant par filtration le fluide alimenté depuis la sortie via la première conduite (4),
**caractérisé en ce que**
une seconde conduite (5) alimentant une partie du fluide sous pression à un second ensemble, par exemple une pompe ou un moteur, bifurque de la première conduite (4) en amont du premier ensemble en termes d'écoulement, et
un élément de filtre (6) est fixé et / ou relié à la bifurcation (41) dans la première conduite (4) et / ou dans la seconde conduite (5) ou à une face frontale de la seconde conduite (5) faisant face à la première conduite (4).

2. Dispositif de pompe selon la revendication 1, dans lequel l'élément de filtre (6) fait saillie au moins partiellement dans la première conduite (4).

3. Dispositif de pompe selon l'une quelconque des revendications précédentes, dans lequel l'élément de filtre (6) est disposé à la bifurcation (41) de telle sorte que du fluide n'arrive dans la seconde conduite (5) que par l'intermédiaire de l'élément de filtre (6), et les impuretés filtrées par l'élément de filtre (6) sont emportées de l'élément de filtre (6) dans la première conduite (4) et entraînées vers le premier ensemble.

4. Dispositif de pompe selon l'une quelconque des revendications précédentes, dans lequel l'élément de filtre (6) est ou comprend une grille, un tamis ou un tissu ou est conçu sous la forme d'une grille ou d'un tamis.

5. Dispositif de pompe selon l'une quelconque des revendications précédentes, dans lequel la première conduite (4) comprend la sortie de la chambre de refoulement (2) et la bifurcation (41) est formée à la sortie.

6. Dispositif de pompe selon l'une quelconque des revendications précédentes, dans lequel la bifurcation (41) se trouve par une section de la première conduite (4) et une section de la seconde conduite (5) à l'intérieur du boîtier de dispositif de pompe (1, 11, 31) et le boîtier de dispositif de pompe (1, 11, 31) forme au moins une partie de la bifurcation (41) et / ou de la première conduite (4) et / ou de la seconde conduite (5).

7. Dispositif de pompe selon l'une quelconque des revendications précédentes, dans lequel le dispositif de pompe (10) est une pompe tandem comprenant une pompe à liquide et une pompe à gaz.

8. Dispositif de pompe selon la revendication 7, dans lequel la pompe à liquide alimente la première conduite (4) et la seconde conduite (5) en fluide.

9. Dispositif de pompe selon la revendication 7 ou 8, dans lequel la pompe à liquide est une pompe de lubrification (20) et la pompe à gaz est une pompe à vide (30).

10. Dispositif de pompe selon l'une quelconque des revendications précédentes, dans lequel le second ensemble est une pompe à gaz, de préférence une pompe à vide.

11. Dispositif de pompe selon l'une quelconque des revendications 7 à 10, dans lequel la seconde conduite (5) alimente la pompe à liquide et / ou la pompe à gaz en lubrifiant et / ou en agent d'étanchéité via une conduite d'alimentation (51).

12. Dispositif de pompe selon l'une quelconque des revendications 7 à 11, dans lequel la seconde conduite (5) alimente une rainure d'étanchéité (35) de la pompe à gaz en agent d'étanchéité via une conduite d'alimentation (52).
